# FASCICULE DE BREVET EUROPEEN

(11) **EP 3 803 074 B1**
(45) Date de publication et mention de la délivrance du brevet: **26.01.2022**
(21) Numéro de dépôt: 19728598.4
(22) Date de dépôt: 24.05.2019
(51) Int. Cl.: F01N 3/20

(54) **SYSTÈME DE STOCKAGE D'UNE SOLUTION AQUEUSE POUR VÉHICULE AUTOMOBILE**
SYSTEM ZUR SPEICHERUNG EINER WÄSSRIGEN LÖSUNG FÜR EIN KRAFTFAHRZEUG
SYSTEM FOR STORING AN AQUEOUS SOLUTION FOR A MOTOR VEHICLE

(30) Priorité: 24.05.2018 FR 1854365
(43) Date de publication de la demande: 14.04.2021
(73) Titulaire: Plastic Omnium Advanced Innovation And Research, 1130 Bruxelles (BE)
(72) Inventeur: DERANGERE, Nicolas, 60280 MARGNY-LES-COMPIEGNE (FR); LECLEC'H, Nicolas, 1130 Bruxelles (BE); GUILLERME, Hervé, 60200 COMPIEGNE (FR)
(74) Mandataire: LLR
(86) Numéro de dépôt international: PCT/EP2019/063510
(87) Numéro de publication internationale: WO 2019/224369

(56) Documents cités:
- WO-A1-2015/011168
- DE-A1-102008 054 803
- DE-A1-102009 002 209
- DE-A1-102014 118 760
- US-A1- 2018 051 612

## Description

L'invention concerne le domaine des véhicules automobiles, et plus spécifiquement les systèmes de stockage d'une solution aqueuse pour véhicule automobile destinés à contenir un liquide susceptible de geler dans les conditions normales d'utilisation du véhicule. Ces systèmes de stockage d'une solution aqueuse pour véhicule automobile comprennent généralement un réservoir comprenant un module technique, en partie immergé, dans lequel sont installés les moyens de pompage ainsi que des dispositifs de mesure de niveau ou de température permettant de gérer la distribution du liquide contenu dans le réservoir.

C'est le cas des systèmes de stockage d'une solution aqueuse pour véhicule automobile dont le réservoir contient une solution d'urée, et faisant l'objet d'un usage courant pour alimenter le système de dépollution des gaz d'échappement du véhicule, comme cela est par exemple connu du document de brevet DE 10 2014 118 760 A1. C'est également le cas des systèmes de stockage d'une solution aqueuse pour véhicule automobile dont le réservoir contient de l'eau, préférentiellement de l'eau déminéralisée, destinée à être injectée dans le circuit d'admission d'air du moteur. Cette eau se mélange au gaz d'admission et permet de réduire les températures de combustion et les émissions de polluants appelés NOx, et d'augmenter les performances, par exemple, d'un moteur à essence en diminuant la sensibilité au cliquetis. La solution d'urée commence à geler lorsque la température descend en dessous de -11°C, en dessous de 0°C pour de l'eau.

A cet effet, le système de stockage d'une solution aqueuse pour véhicule automobile comprend dans le réservoir des moyens de chauffage prévus pour éviter le gel de la solution d'urée ou de l'eau, préférentiellement de l'eau déminéralisée.

Toutefois, ces moyens de chauffage sont désactivés lorsque, le véhicule est mis à l'arrêt après une période de roulage et, quand le véhicule stationne à l'extérieur dans des conditions externes hivernales sévères, pouvant atteindre par exemple des températures de l'ordre de -40°C, la transformation en glace de la solution d'urée ou de l'eau, préférentiellement de l'eau déminéralisée, contenue dans le réservoir s'amorce et peut conduire à la congélation de la totalité de la solution d'urée ou de l'eau, préférentiellement de l'eau déminéralisée, en quelques dizaines de minutes.

Dans ces conditions de congélation rapide, il a été observé des dégradations du module technique, longtemps restées inexpliquées, et pouvant conduire à la destruction totale du module technique ou des organes qu'il contient.

Des analyses en laboratoire ont permis de mettre en évidence les phénomènes physiques intervenant pendant cette période.

Ainsi un système de stockage d'une solution aqueuse pour véhicule automobile comprenant un réservoir fermé équipé d'un module technique et contenant un certain volume de solution d'urée a été placé dans une enceinte froide maintenue à une température de l'ordre de -40°C. Le module technique est totalement immergé dans le volume de liquide. Ce volume de liquide est surmonté d'une partie gazeuse restant tout au long de l'expérience à la pression atmosphérique. De même, certains organes du module technique tels que la pompe ou les flotteurs de niveau sont également à la pression atmosphérique.

On observe que la glace commence à se former à proximité des parois du réservoir par lesquelles les échanges thermiques s'opèrent. La croissance du volume de glace s'effectue alors en progressant vers la région centrale du réservoir occupée par le module technique. Au bout d'un temps donné, la surface du liquide gèle à son tour.

On observe alors la création d'une bulle de liquide emprisonnée de toute part par de la matière gelée et dans laquelle la partie supérieure du module technique est immergée.

Une observation plus poussée, permet de mettre en évidence que la pression régnant à l'intérieur de cette bulle de liquide entièrement entourée de glace peut alors atteindre des valeurs très élevées, de l'ordre de plusieurs dizaines de bars.

Ce phénomène est lié au fait que la compressibilité du liquide formant la bulle est faible et que, la formation de la glace se poursuivant, l'augmentation de volume liée à cette transition soumet la bulle de liquide à des pressions progressant rapidement.

Il en résulte que les organes du module technique restant à la pression atmosphérique subissent des contraintes mécaniques très supérieures à la résistance des matériaux qui les constituent, lesquels se déforment jusqu'à se rompre.

En poursuivant l'expérience, la bulle de liquide se résorbe petit à petit jusqu'à ce que l'ensemble du liquide préalablement contenu dans le réservoir soit transformé en glace.

L'invention a donc notamment pour objectif de fournir une protection contre le gel améliorée pour un système de stockage d'une solution aqueuse pour véhicule automobile, plus particulièrement de fournir une protection contre le gel améliorée pour un réservoir d'additif de gaz d'échappement tel qu'une solution aqueuse d'urée ou un réservoir d'eau destinée à être injectée dans le moteur, et/ou tous les composants prévus dans lesdits réservoirs.

L'invention a donc notamment pour objectif de fournir un système de stockage d'une solution aqueuse pour véhicule automobile.

Plus précisément, un objectif de l'invention, dans au moins un de ses modes de réalisation, est de fournir une protection contre le gel améliorée pour un système de stockage d'une solution aqueuse pour véhicule automobile, plus particulièrement de fournir une protection contre le gel améliorée pour un réservoir d'additif de gaz d'échappement tel qu'une solution aqueuse d'urée ou un réservoir d'eau destinée à être injectée dans le moteur, et/ou tous les composants prévus dans lesdits réservoirs.

L'invention concerne un système de stockage d'une solution aqueuse pour véhicule automobile, lequel système comprend un réservoir pour stocker la solution aqueuse dans un état liquide et/ou congelé, dans lequel une poche de liquide de la solution aqueuse peut être emprisonnée en totalité dans un volume de glace en formation surmonté d'un volume de gaz, lequel système comprend un module technique comprenant un moyen de pompage et un moyen pour libérer la pression de la poche de liquide de la solution aqueuse dans le volume de gaz.

Selon l'invention, un tel système de stockage d'une solution aqueuse pour véhicule automobile est tel que le moyen pour libérer la pression comprend au moins deux canaux, de préférence de forme conique, ayant une section croissante au moins le long d'une première longueur dans une direction de propagation du relâchement de pression et ayant une première extrémité ouverte et une deuxième extrémité ouverte opposée, tel que au moins une première extrémité desdits canaux est présente - en utilisation - dans la poche de liquide de ladite solution aqueuse et tel que au moins une seconde extrémité desdits canaux est présente dans ledit volume de gaz.

Le principe général de l'invention repose sur l'utilisation d'un moyen pour libérer la pression comprenant au moins deux canaux, de préférence de forme conique, ayant une section croissante au moins le long d'une première longueur dans une direction de propagation du relâchement de pression.

Ainsi, l'invention repose sur un système de stockage d'une solution aqueuse pour véhicule automobile. Ledit système comprend un moyen pour libérer la pression comprenant au moins deux canaux de forme conique ayant une section croissante au moins le long d'une première longueur dans une direction de propagation du relâchement de pression. La présence de ces deux canaux permet d'éviter une détérioration du système de stockage d'une solution aqueuse pour véhicule automobile, plus particulièrement d'un réservoir d'additif de gaz d'échappement tel qu'une solution d'urée ou d'un réservoir d'eau destinée à être injectée dans le moteur, et/ou tous les composants prévus dans lesdits réservoirs. Par l'expression « module technique comprenant un moyen de pompage », on entend désigner toute enceinte fermée (ne laissant pas pénétré la solution aqueuse) ou ouverte (laissant pénétré la solution aqueuse) comprenant un moyen de pompage, de tels modules techniques sont connus de l'homme de métier sous l'appellation ADM (AdBlue Delivery Module) ou WDM (Water Delivery Module). Préférentiellement, le moyen pour libérer la pression est tel que les grands axes desdits au moins deux canaux sont parallèles, ceci permettant de réduire les contraintes exercées sur le moyen pour libérer la pression.

L'expression « forme conique » s'entend au sens large et comprend par exemple une forme de cône de révolution, une forme tronconique de révolution, une forme pyramidale, une forme en tronc de pyramide, prises seules ou en combinaison. La base de la forme pyramidale est par exemple un polygone avec n côtés, n étant égal à 3, 4 ou plus.

Selon un mode de réalisation préférentiel, les au moins deux canaux du moyen de libération de pression sont de forme tronconique de révolution.

Le système de stockage d'une solution aqueuse pour véhicule automobile selon l'invention est tel que les au moins deux canaux de forme conique du moyen de libération de pression ont une section croissante au moins le long d'une deuxième longueur, ladite deuxième longueur suivant la première longueur dans la direction de propagation du relâchement de pression, la croissance de la section étant plus importante le long de la deuxième longueur par rapport à la croissance de la section le long de la première longueur.

Ainsi, un moyen pour libérer la pression comprenant au moins deux canaux de forme conique présentant une section croissante au moins le long d'une deuxième longueur, ladite deuxième longueur suivant la première longueur dans la direction de propagation du relâchement de pression, la croissance de la section étant plus importante le long de la deuxième longueur par rapport à la croissance de la section le long de la première longueur permet d'augmenter le jeu entre une carotte de solution aqueuse gelée dans lesdits canaux et le moyen pour libérer la pression, facilitant de ce fait l'expulsion du liquide sous pression. En particulier, un moyen pour libérer la pression comprenant deux canaux de forme conique décomposable en deux cônes d'angles différents avec une augmentation de l'angle dans la partie supérieure des canaux permet grâce à cet évasement de récupérer la carotte de glace lorsque le phénomène a lieu en pente et ainsi libérer toute la section de passage pour le liquide. Le déplacement de la carotte dans son logement peut être comparé à une soupape, permettant la relâche de la pression de la dernière bulle liquide, dont la pression minimale de fonctionnement est réglable par la masse de la carotte, la friction de la glace contre la pièce et la surface d'application de la pression.

Selon un mode de réalisation préférentiel, les au moins deux canaux du moyen de libération de pression présentent des parois d'épaisseur constante le long de la direction de propagation du relâchement de pression. Par exemple, dans le cas où les au moins deux canaux du moyen de libération de pression sont de forme tronconique de révolution, la direction de propagation du relâchement de pression est parallèle à l'axe longitudinal de chaque canal.

Ainsi, la masse du moyen de libération de pression est diminuée, et le poids du système de stockage d'une solution aqueuse pour véhicule automobile est diminué. Le produit final est réalisé avec moins de matériau, par exemple de matériau plastique, et est ainsi plus léger. Dans le cas d'une fabrication par injection plastique, le processus d'injection est facilité. Un système de stockage est par conséquent obtenu de manière plus économique, s'agissant du coût de matériau et du coût de fabrication.

Selon un mode de réalisation préférentiel, le système de stockage d'une solution aqueuse pour véhicule automobile selon l'invention, est tel qu'au moins un canal a une seconde extrémité présente dans ledit volume de gaz plus longue que les secondes extrémités des autres canaux. Par l'expression « une seconde extrémité présente dans ledit volume de gaz plus longue », on entend désigner le fait qu'au moins une seconde extrémité d'au moins un canal présente dans ledit volume de gaz est plus longue que les secondes extrémités des autres canaux.

Ainsi, un canal ayant une seconde extrémité présente dans ledit volume de gaz plus longue, un allongement permet d'assurer le fonctionnement du moyen pour libérer la pression dans des conditions de parking en pente pouvant aller jusqu'à des pentes de 30% en fonction de la longueur de la seconde extrémité.

Selon un mode de réalisation préférentiel, le système de stockage d'une solution aqueuse pour véhicule automobile selon l'invention, est tel qu'au moins un canal a une première extrémité présente dans ladite solution aqueuse plus longue que les premières extrémités des autres canaux. Par l'expression « une première extrémité présente dans ladite solution aqueuse plus longue », on entend désigner le fait qu'au moins une première extrémité d'au moins un canal présente dans ladite solution aqueuse est plus longue que les premières extrémités des autres canaux.

Ainsi, un canal ayant une première extrémité présente dans ladite solution aqueuse plus longue permet d'assurer le fonctionnement du moyen pour libérer la pression en fonction de l'évolution de la taille de bulle de liquide et du positionnement de celle-ci.

Selon un mode de réalisation préférentiel, le système de stockage d'une solution aqueuse pour véhicule automobile selon l'invention, est tel que les au moins deux canaux sont liés entre eux par au moins un moyen de solidarisation. Préférentiellement, le moyen de solidarisation est une languette ou une pluralité de languettes, plus préférentiellement le moyen de solidarisation lie entre eux les au moins deux canaux selon un plan comprenant une direction de propagation du relâchement de pression. De préférence, le moyen de solidarisation lie entre eux les au moins deux canaux selon un plan parallèle à une direction de propagation du relâchement de pression, préférentiellement selon un plan comprenant une direction de propagation du relâchement de pression. Plus préférentiellement le moyen de solidarisation lie entre eux les au moins deux canaux selon un plan parallèle à une direction de propagation du relâchement de pression, préférentiellement selon un plan comprenant une direction de propagation du relâchement de pression, et un plan perpendiculaire à un direction de propagation du relâchement de pression.

Ainsi, un moyen de solidarisation liant les au moins deux canaux entre eux permet, d'une part, un meilleur contrôle de la distance entre les deux canaux d'une part, et d'autre part d'obtenir un moyen pour libérer la pression ayant une structure rigidifiée.

Selon un mode de réalisation préféré du mode précédent, le système de stockage d'une solution aqueuse pour véhicule automobile selon l'invention, est tel que le au moins un moyen de solidarisation comprend au moins une ouverture ou trou traversant. Par l'expression « une ouverture ou trou traversant », on entend désigner une ouverture dont la longueur est beaucoup plus petite que la longueur des canaux.

Ainsi, un moyen de solidarisation comprenant au moins une ouverture ou trou traversant permet le passage du front de gel et ainsi limite les contraintes que pourrait provoquer ce phénomène, plus particulièrement lorsque le moyen de solidarisation est partiellement immergé.

Selon un mode de réalisation préférentiel, le système de stockage d'une solution aqueuse pour véhicule automobile selon l'invention, est tel que le moyen pour libérer la pression est d'une seule pièce monobloc.

Ainsi, un moyen de solidarisation en une seule pièce monobloc permet une insertion plus aisée au sein du réservoir.

Selon un mode de réalisation préférentiel, le système de stockage d'une solution aqueuse pour véhicule automobile selon l'invention, est tel que le moyen pour libérer la pression est en matériau thermoplastique, préférentiellement en nylon ou en polyéthylène haute densité, plus préférentiellement en polyéthylène haute densité.

Ainsi, un moyen pour libérer la pression en matériau thermoplastique, préférentiellement en nylon ou en polyéthylène haute densité, plus préférentiellement en polyéthylène haute densité, permet de disposer d'un moyen pour libérer la pression souple et résistant à l'urée et/ou à l'eau.

Selon un mode de réalisation préférentiel, le système de stockage d'une solution aqueuse pour véhicule automobile selon l'invention, est tel que le réservoir pour stocker la solution aqueuse dans un état liquide et/ou congelé comprend au moins un moyen de blocage apte à maintenir le moyen pour libérer la pression.

Ainsi, un réservoir comprend un moyen de blocage apte à maintenir le moyen pour libérer la pression en place dans le réservoir. Ledit moyen de blocage est sélectionné parmi une dépouille des faces du réservoir apte à recevoir ledit moyen de blocage et/ou par des nervures ou godrons. Préférentiellement, le moyen de blocage est tel qu'il permet une translation du moyen pour libérer la pression en fonction du niveau de remplissage du réservoir.

Selon un mode de réalisation particulier, le moyen de blocage porté par le réservoir est une nervure, laquelle coopère avec une rainure portée par le moyen pour libérer la pression et une agrafe disposée dans la rainure.

Ainsi, le moyen pour libérer la pression est fixé sur le réservoir de manière particulièrement simple, et le montage du système de stockage d'une solution aqueuse pour véhicule automobile est facilité.

Selon un mode de réalisation préférentiel, le système de stockage d'une solution aqueuse pour véhicule automobile selon l'invention, est tel que le moyen pour libérer la pression est situé à la verticale du module technique comprenant un moyen de pompage. Par le terme « verticale », on entend désigner une direction selon la gravité terrestre lorsque le réservoir est à l'horizontale mesuré par un niveau à bulle. Ainsi, on définit un « élément supérieur » par rapport à un « élément inférieur » par leur disposition mutuelle sur un axe vertical, l'élément inférieur étant plus proche de la Terre que l'élément supérieur.

Ainsi, les inventeurs ont noté que de manière surprenante la bulle liquide est habituellement localisée au-dessus du module technique. Une telle disposition permet de placer le moyen pour libérer la pression en position optimum de fonctionnement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- La figure 1 illustre un système de stockage d'une solution aqueuse pour véhicule automobile selon l'invention.
- La figure 2 présente une coupe transversale d'un moyen pour libérer la pression de la poche de liquide dans le volume de gaz utilisé dans un système de stockage d'une solution aqueuse pour véhicule automobile selon l'invention.

- La figure 3 illustre un moyen pour libérer la pression de la poche de liquide dans le volume de gaz utilisé dans un système de stockage d'une solution aqueuse pour véhicule automobile selon l'invention.
- La figure 4 présente un système de stockage d'une solution aqueuse pour véhicule automobile selon l'invention en coupe transversale.
- La figure 5 est une vue en perspective éclatée d'un moyen pour libérer la pression de la poche de liquide dans le volume de gaz utilisé dans un système de stockage d'une solution aqueuse pour véhicule automobile et d'une agrafe, selon un mode particulier de réalisation de l'invention.
- La figure 6 est une vue en perspective de l'agrafe illustrée sur la figure 5.
- La figure 7 est une vue en perspective de côté d'un détail d'un moyen pour libérer la pression équipé d'une agrafe, à savoir les éléments illustrés sur la figure 5, à l'état monté.
- La figure 8 est une vue d'un détail d'un système de stockage d'une solution aqueuse pour véhicule automobile comprenant un réservoir, ainsi qu'un moyen pour libérer la pression et une agrafe tels qu'illustrés sur les figures 5 à 7.

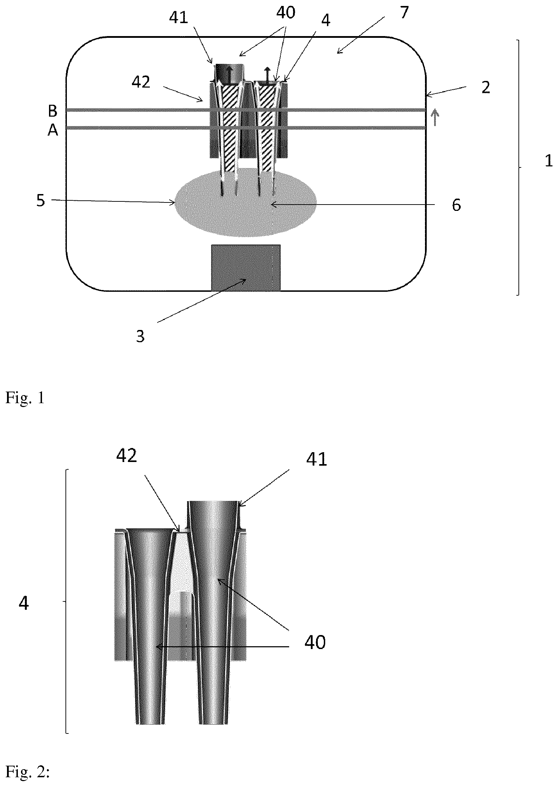

On présente, en relation avec la figure 1, un mode de réalisation d'un système de stockage d'une solution aqueuse pour véhicule automobile (1) selon l'invention. Le système de stockage d'une solution aqueuse pour véhicule automobile (1) comprend un réservoir (2) pour stocker la solution aqueuse (6) dans un état liquide et/ou congelé, dans lequel une poche de liquide (5) de la solution aqueuse (6) peut être emprisonnée en totalité dans un volume de glace en formation surmonté d'un volume de gaz (7), lequel système (1) comprend un module technique (3) comprenant un moyen de pompage et un moyen pour libérer la pression (4) de la poche de liquide (5) de la solution aqueuse (6) dans le volume de gaz (7). Le moyen pour libérer la pression (4) comprend au moins deux canaux (40) de forme conique, par exemple, de forme tronconique de révolution, ayant une section croissante au moins le long d'une première longueur dans une direction de propagation du relâchement de pression et ayant une première extrémité ouverte et une deuxième extrémité ouverte opposée, tel que au moins une première extrémité desdits canaux (40) est présente - en utilisation - dans la poche de liquide (5) de ladite solution aqueuse (6) et tel que au moins une seconde extrémité desdits canaux (40) est présente dans ledit volume de gaz (7). Le moyen pour libérer la pression (4) comprend au moins un canal (40) ayant une seconde extrémité (41) présente dans ledit volume de gaz plus longue. Le moyen pour libérer la pression (4) comprend au moins un moyen de solidarisation (42) constitué d'une pluralité de languettes jointes entre elles. Ledit moyen pour libérer la pression (4) est préférentiellement d'une seule pièce monobloc en matériau thermoplastique, préférentiellement en nylon ou en polyéthylène haute densité, plus préférentiellement en polyéthylène haute densité. Ce moyen pour libérer la pression (4) est situé à la verticale du module technique (3) comprenant un moyen de pompage. Le moyen pour libérer la pression (4) est disposé dans le réservoir (2) au-dessus du niveau solution aqueuse nominal auquel est rajouté 10% pour prendre en compte l'expansion de la solution aqueuse (solution aqueuse d'urée ou eau) lors de la solidification de la solution aqueuse en glace. Lorsque le réservoir (2) est rempli, le moyen pour libérer la pression (4) est partiellement immergé dans la solution aqueuse. Les niveaux A et B indiquent l'expansion liée au phénomène de solidification de la solution aqueuse (6).

La figure 2 présente une coupe transversale d'un moyen pour libérer la pression (4) de la poche de liquide (5) dans le volume de gaz utilisé dans un système de stockage d'une solution aqueuse pour véhicule automobile (1). Le moyen pour libérer la pression (4) comprend au moins deux canaux (40) de forme conique ayant une section croissante au moins le long d'une première longueur dans une direction de propagation du relâchement de pression et ayant une première extrémité ouverte et une deuxième extrémité ouverte opposée, tel que au moins une première extrémité desdits canaux (40) est présente - en utilisation - dans ladite solution aqueuse (6) et tel que au moins une seconde extrémité desdits canaux (40) est présente dans ledit volume de gaz (7). Les au moins deux canaux (40) de forme conique du moyen de libération de pression (4) présentent une section croissante au moins le long d'une deuxième longueur, ladite deuxième longueur suivant la première longueur dans la direction de propagation du relâchement de pression, la croissance de la section étant plus importante le long de la deuxième longueur par rapport à la croissance de la section le long de la première longueur. Les canaux (40) se présentent donc sous la forme de cylindres de communication décomposables en deux cônes d'angles différents. L'augmentation de l'angle dans la partie supérieure du cylindre permet d'augmenter le jeu entre la carotte gelée et le moyen pour libérer la pression (4), facilitant de ce fait l'expulsion du liquide sous pression. Cet évasement permet par ailleurs de récupérer la carotte de glace lorsque le phénomène a lieu en pente et ainsi libérer toute la section de passage pour le liquide. Le déplacement de la carotte dans son logement peut être comparé à une soupape, permettant la relâche de la pression de la dernière bulle liquide, dont la pression minimale de fonctionnement est réglable par la masse de la carotte, la friction de la glace contre la pièce et la surface d'application de la pression. Dans cet exemple, les au moins deux canaux (40) du moyen de libération de pression (4) présentent des parois d'épaisseur constante le long de la direction de propagation du relâchement de pression. Le moyen pour libérer la pression (4) comprend au moins un canal (40) ayant une seconde extrémité (41) présente dans ledit volume de gaz plus longue. Les conditions d'utilisation des véhicules automobiles peuvent conduire à des situations de parking en pente, un ou plusieurs cylindres de tailles et de formes différentes sont nécessaires pour s'assurer que le point de sortie du liquide soit constamment au-dessus du front de gel. Dans le mode de réalisation présenté en figure 2, un allongement de la seconde extrémité (41) a été réalisé afin d'assurer un bon fonctionnement du moyen pour libérer la pression (4) dans des conditions de parking en pente de 30%. Le moyen pour libérer la pression (4) comprend au moins un moyen de solidarisation (42) constitué d'au moins une languette.

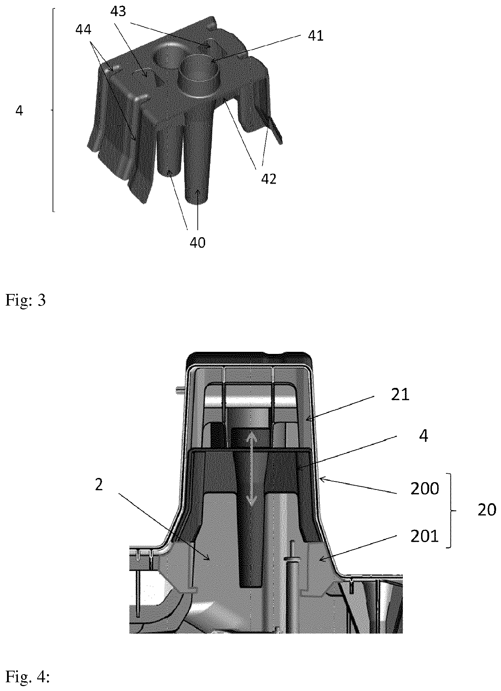

La figure 3 illustre un moyen pour libérer la pression (4) de la poche de liquide dans le volume de gaz utilisé dans un système de stockage d'une solution aqueuse pour véhicule automobile (1) selon l'invention. Ledit moyen pour libérer la pression (4) comprend au moins deux canaux (40) de forme conique ayant une section croissante au moins le long d'une première longueur dans une direction de propagation du relâchement de pression et ayant une première extrémité ouverte et une deuxième extrémité ouverte opposée, laquelle première extrémité est présente - en utilisation - dans ladite solution aqueuse et laquelle seconde extrémité est présente dans ledit volume de gaz. Les au moins deux canaux (40) de forme conique du moyen de libération de pression (4) présentent une section croissante au moins le long d'une deuxième longueur, ladite deuxième longueur suivant la première longueur dans la direction de propagation du relâchement de pression, la croissance de la section étant plus importante le long de la deuxième longueur par rapport à la croissance de la section le long de la première longueur. Le moyen pour libérer la pression (4) comprend au moins un canal (40) ayant une seconde extrémité (41) présente dans ledit volume de gaz plus longue. Le moyen pour libérer la pression (4) comprend un moyen de solidarisation (42) liant entre eux les au moins deux canaux (40). Le moyen de solidarisation comprend au moins une ouverture ou trou traversant (43), ledit moyen de solidarisation (42) comprenant également des renfoncements (44) aptes à recevoir des nervures (21) présentes sur les parois du réservoir (2). Lesdits renfoncements (44) permettent un coulissement du moyen pour libérer la pression (4) le long desdites nervures (21).

La figure 4 présente un système de stockage d'une solution aqueuse pour véhicule automobile (1) selon l'invention en coupe transversale. Le système de stockage (1) selon l'invention comprend un réservoir (2) comprenant des moyens de blocage (20) sous la forme de godron (201) et d'une dépouille des faces (200) du réservoir (2). Lesdits moyens de blocage forment une butée d'arrêt du moyen pour libérer la pression (4) dans le sens de l'expansion de la glace. Ledit réservoir (2) comprend des nervures (21) permettant une translation du moyen pour libérer la pression (4) le long de ces nervures (21) pour pouvoir garantir son efficacité à plusieurs niveaux de remplissage du réservoir (2).

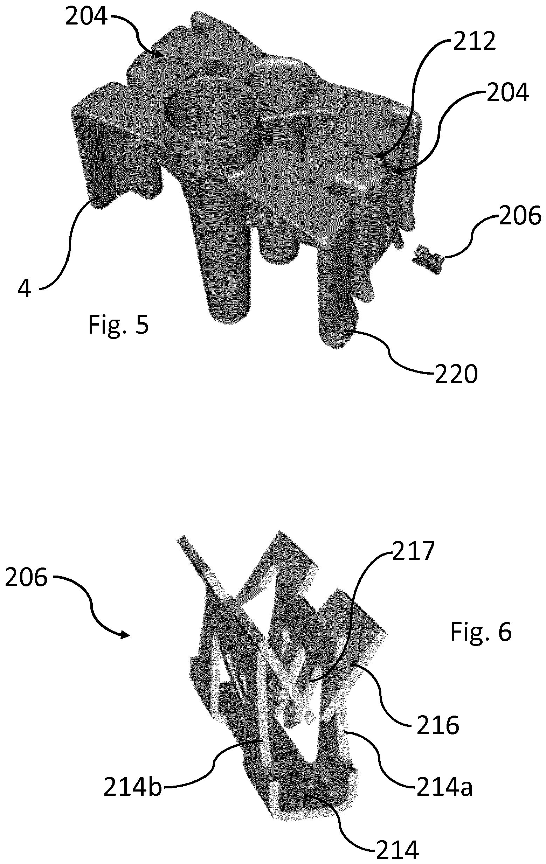

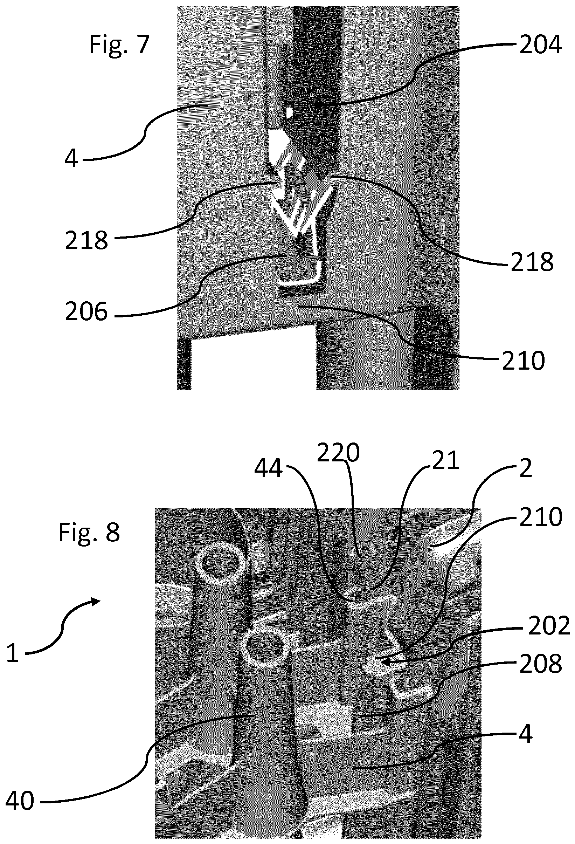

Les figures 5 à 8 illustrent un système de stockage d'une solution aqueuse pour véhicule automobile selon un mode particulier de réalisation de l'invention. Le système de stockage (1) comprend des moyens de blocage (202) configurés pour maintenir le moyen pour libérer la pression (4) sur le réservoir (2), en particulier sur une demi-coque supérieure du réservoir (2), lorsque le réservoir (2) est composé d'une demi-coque supérieure et d'une demi-coque inférieure. Pour cela, les moyens de blocage (202) comprennent au moins une rainure (204), de préférence portée par le moyen pour libérer la pression (4), au moins une agrafe (206) et au moins une nervure (208), de préférence portée par le réservoir (2). Dans l'exemple illustré sur la figure 7, le système de stockage (1) est tel que le moyen pour libérer la pression (4) comprend la au moins une rainure (204) dans laquelle est disposée une agrafe (206). Chaque rainure (204) coopère avec une nervure (208) portée par le réservoir (2), laquelle forme ainsi un moyen de blocage (20) sur le réservoir (2). Chaque rainure (204) s'étend dans la direction de propagation du relâchement de pression, depuis une extrémité formant butée pour une agrafe (206), laquelle forme un élément de fixation pour une nervure (208). Dans l'exemple illustré sur la figure 5, le moyen pour libérer la pression comprend deux rainures (204), lesquelles coopèrent avec des parois du réservoir (2) se trouvant en vis-à-vis.

La rainure (204) est par exemple réalisée sous la forme d'une encoche dans le moyen pour libérer la pression (4). L'extrémité amont (210) de la rainure (204) dans la direction de propagation du relâchement de pression est fermée, de manière à former une butée pour l'agrafe (206). Ainsi, la rainure (204) forme un logement de réception de l'agrafe (206). L'extrémité aval (212), opposée à l'extrémité amont (210), est ouverte de manière à permettre l'insertion de la nervure (208) du réservoir (2) dans la rainure (204)

L'agrafe (206) est de préférence réalisée en métal. Elle comporte une âme (214) possédant une forme générale de U, et au moins deux branches (216, 217) s'étendant depuis l'âme (214), de manière à enserrer entre elles une nervure (208) du réservoir (2), à l'état monté. Dans l'exemple illustré sur la figure 6, l'agrafe (206) comprend deux paires de branches (216) faisant saillie vers l'intérieur et la partie inférieure de l'âme (214) depuis l'extrémité supérieure de chaque montant (241a, 214b) de l'âme (214) en forme de U. L'agrafe (206 comprend également deux paires de branches (217) faisant saillie vers l'intérieur et la partie inférieure de l'âme (214) depuis l'extrémité supérieure d'évidements en vis-à-vis situés sur chaque montant (214a, 214b) de l'âme (214) en forme de U. L'agrafe (206) est maintenue dans la direction de propagation du relâchement de pression par des ergots (218) portés par le moyen pour libérer la pression (4). Les ergots (218) sont disposés dans la rainure (204), et coopèrent avec l'âme (214), de préférence avec les extrémités de la forme en U. Ainsi l'agrafe (206) est maintenue en position dans la direction de propagation du relâchement de pression, d'un côté par la butée formée par l'extrémité amont (210) de la rainure (204), et de l'autre côté par les ergots (218).

Lors du montage, l'agrafe (206) est disposée dans le logement de réception du moyen pour libérer la pression (4), délimité par l'extrémité amont (210) et les ergots (218). Ensuite, le moyen pour libérer la pression (4) est inséré dans le réservoir (2), de manière à ce qu'une nervure (208) du réservoir (2) coulisse dans la rainure (204) du moyen pour libérer la pression (2), depuis l'extrémité aval (212) du moyen pour libérer la pression (4). La nervure (208) est ensuite engagée entre les branches (216) de l'agrafe (206) et se trouve enserrée entre celles-ci. Dans cet exemple, comme illustré sur la figure 6, les branches (216, 217) de l'agrafe (206) sont obliques par rapport à la direction de propagation du relâchement de pression, de manière à former un élément anti-retour empêchant le déplacement du moyen pour libérer la pression (4) par rapport au réservoir (2). Ainsi, dans ce mode de réalisation particulier de l'invention, la translation du moyen pour libérer la pression (4) par rapport au réservoir (2) est empêchée ou restreinte dans les deux sens selon la direction de propagation du relâchement de pression.

En fonctionnement, en cas de gel, en raison des contraintes dues à l'expansion résultant du changement de phase de solution aqueuse en glace, la transmission de contraintes selon la direction de propagation du relâchement de pression est effectuée par la forme complémentaire du moyen pour libérer la pression (4) et du réservoir (2), l'agrafe (206) n'étant alors pas contrainte, ou peu contrainte en raison d'un léger déplacement relatif du moyen pour libérer la pression (4) par rapport au réservoir (2), résultant d'une compression du moyen pour libérer la pression (4) contre le réservoir (2). A contrario, lors d'un dégel, les branches (216) de l'agrafe (206) subissent une contrainte, par exemple en raison du poids du moyen pour libérer la pression (4), du fait qu'elles empêchent le déplacement relatif de la nervure (208) et du moyen pour libérer la pression (4) dans un sens opposé à celui de l'expansion de la glace dans le réservoir (2). S'agissant des contraintes dues au gel ou au dégel dans des directions sensiblement perpendiculaires à la direction de propagation du relâchement de pression, celles-ci sont exercées, comme illustré sur la figure 8, sur les renfoncements (44) et les nervures (21), ces éléments étant prévus pour résister à de telles contraintes.

Ainsi, la nervure (218) du réservoir (2) prise par l'agrafe (206) peut s'enfoncer dans l'agrafe (206) en cas de gel, mais celle-ci ne s'engage pas jusqu'au fond de l'agrafe, au contact de la partie inférieure de l'âme (214). En effet, le déplacement du moyen pour libérer la pression (4) est stoppé par la dépouille (220) du moyen pour libérer la pression, laquelle vient en contact avec une surface complémentaire sur le réservoir (2), et ce avant que la nervure (218) n'arrive au fond de l'agrafe (206). Par ailleurs, après dégel, le moyen pour libérer la pression (4) ne revient pas dans sa position initiale, du fait qu'il est retenu contre le réservoir (2) au moyen de l'agrafe (206). En d'autres termes, l'éventuel déplacement - selon la direction de propagation du relâchement de pression - du moyen pour libérer la pression (4) relativement au réservoir (2) en cas de gel, ne se produit qu'une seule fois durant le fonctionnement du système de stockage (1).

Bien entendu, l'invention n'est pas limitée aux exemples de réalisation mentionnés ci-dessus.

## Revendications

1. Système de stockage d'une solution aqueuse pour véhicule automobile (1), lequel système (1) comprend un réservoir (2) pour stocker la solution aqueuse (6) dans un état liquide et/ou congelé, dans lequel une poche de liquide (5) de la solution aqueuse (6) peut être emprisonnée en totalité dans un volume de glace en formation surmonté d'un volume de gaz (7), lequel système (1) comprend un module technique (3) comprenant un moyen de pompage et un moyen pour libérer la pression (4) de la poche de liquide (5) de la solution aqueuse (6) dans le volume de gaz (7), tel que le moyen pour libérer la pression (4) comprend au moins deux canaux (40) ayant une section croissante au moins le long d'une première longueur dans une direction de propagation du relâchement de pression et ayant une première extrémité ouverte et une deuxième extrémité ouverte opposée, tel que au moins une première extrémité desdits canaux (40) est présente - en utilisation - dans la poche de liquide (5) de ladite solution aqueuse (6) et tel que au moins une seconde extrémité desdits canaux (40) est présente dans ledit volume de gaz (7), **caractérisé en ce que** les au moins deux canaux (40) du moyen de libération de pression (4) ont une section croissante au moins le long d'une deuxième longueur, ladite deuxième longueur suivant la première longueur dans la direction de propagation du relâchement de pression, la croissance de la section étant plus importante le long de la deuxième longueur par rapport à la croissance de la section le long de la première longueur.

2. Système de stockage d'une solution aqueuse pour véhicule automobile selon la revendication précédente, dans lequel les au moins deux canaux (40) du moyen de libération de pression (4) sont de forme conique.

3. Système de stockage d'une solution aqueuse pour véhicule automobile selon la revendication précédente, dans lequel les au moins deux canaux (40) du moyen de libération de pression (4) sont de forme tronconique de révolution.

4. Système de stockage d'une solution aqueuse pour véhicule automobile selon l'une quelconque des revendications précédentes, dans lequel les au moins deux canaux (40) du moyen de libération de pression (4) présentent des parois d'épaisseur constante le long de la direction de propagation du relâchement de pression.

5. Système de stockage d'une solution aqueuse pour véhicule automobile (1) selon une quelconque des revendications précédentes, tel que au moins un canal (40) a une seconde extrémité présente dans ledit volume de gaz (7) plus longue (41) que les secondes extrémités des autres canaux (40).

6. Système de stockage d'une solution aqueuse pour véhicule automobile (1) selon une quelconque des revendications précédentes, tel que au moins un canal (40) a une première extrémité présente dans ladite solution aqueuse (6) plus longue que les premières extrémités des autres canaux (40).

7. Système de stockage d'une solution aqueuse pour véhicule automobile (1) selon une quelconque des revendications précédentes, tel que les au moins deux canaux (40) sont liés entre eux par au moins un moyen de solidarisation (42).

8. Système de stockage d'une solution aqueuse pour véhicule automobile (1) selon la revendication précédente, tel que le au moins un moyen de solidarisation comprend au moins une ouverture ou trou traversant (43).

9. Système de stockage d'une solution aqueuse pour véhicule automobile (1) selon une quelconque des revendications précédentes, tel que le moyen pour libérer la pression (4) est d'une seule pièce monobloc.

10. Système de stockage d'une solution aqueuse pour véhicule automobile (1) selon une quelconque des revendications précédentes, tel que le moyen pour libérer la pression (4) est en est en matériau thermoplastique, préférentiellement en nylon ou en polyéthylène haute densité, plus préférentiellement en polyéthylène haute densité.

11. Système de stockage d'une solution aqueuse pour véhicule automobile (1) selon une quelconque des revendications précédentes, tel que le réservoir (2) pour stocker la solution aqueuse dans un état liquide et/ou congelé comprend au moins un moyen de blocage (20) apte à maintenir le moyen pour libérer la pression (4).

12. Système de stockage selon la revendication précédente, dans lequel le moyen de blocage (20) est une nervure (208), laquelle coopère avec une rainure (204) portée par le moyen pour libérer la pression (4) et une agrafe (206) disposée dans la rainure (204).

13. Système de stockage d'une solution aqueuse pour véhicule automobile (1) selon une quelconque des revendications précédentes, tel que le moyen pour libérer la pression (4) est situé à la verticale du module technique (3) comprenant un moyen de pompage.

## Patentansprüche

1. System zur Speicherung einer wässrigen Lösung für Kraftfahrzeug (1), wobei das System (1) einen Tank (2) aufweist, um die wässrige Lösung (6) in einem flüssigen und/oder gefrorenen Zustand zu speichern, wobei eine Flüssigkeitsblase (5) der wässrigen Lösung (6) in einem zu frieren beginnenden Flüssigkeitsvolumen, das von einem Gasvolumen (7) überragt ist, vollständig eingeschlossen ist, wobei das System (1) ein technisches Modul (3) aufweist, das ein Pumpmittel und ein Mittel (4) zum Freisetzen des Drucks der Flüssigkeitsblase (5) der wässrigen Lösung (6) in dem Gasvolumen (7) umfasst, wobei das Mittel (4) zum Freisetzen des Drucks wenigstens zwei Leitungen (40) aufweist, die einen Querschnitt aufweisen, der wenigstens entlang einer ersten Länge in einer Ausbreitungsrichtung der Druckentspannung zunimmt, und ein erstes offenes Ende und ein gegenüberliegendes zweites offenes Ende aufweisen, wobei wenigstens ein erstes Ende der Leitungen (40) - bei Verwendung - in der Flüssigkeitsblase (5) der wässrigen Lösung (6) vorhanden ist und wobei wenigstens ein zweites Ende der Leitungen (40) in dem Gasvolumen (7) vorhanden ist, **dadurch gekennzeichnet, dass** die wenigstens zwei Leitungen (40) des Mittels (4) zum Freisetzen des Drucks einen wenigstens entlang einer zweiten Länge zunehmenden Querschnitt aufweisen, wobei die zweite Länge der ersten Länge in der Ausbreitungsrichtung der Druckentspannung folgt, wobei die Zunahme des Querschnitts entlang der zweiten Länge größer ist als die Zunahme des Querschnitts entlang der ersten Länge.

2. System zur Speicherung einer wässrigen Lösung für Kraftfahrzeug nach dem vorhergehenden Anspruch, wobei die wenigstens zwei Leitungen (40) des Mittels (4) zum Freisetzen des Drucks eine konische Form aufweisen.

3. System zur Speicherung einer wässrigen Lösung für Kraftfahrzeug nach dem vorhergehenden Anspruch, wobei die wenigstens zwei Leitungen (40) des Mittels (4) zum Freisetzen des Drucks eine kegelstumpfförmige Rotationsform aufweisen.

4. System zur Speicherung einer wässrigen Lösung für Kraftfahrzeug nach einem der vorhergehenden Ansprüche, wobei die wenigstens zwei Leitungen (40) des Mittels (4) zum Freisetzen des Drucks Wände aufweisen, deren Dicke entlang der Ausbreitungsrichtung der Druckentspannung konstant ist.

5. System zur Speicherung einer wässrigen Lösung für Kraftfahrzeug (1) nach einem der vorhergehenden Ansprüche, wobei wenigstens eine Leitung (40) ein zweites Ende aufweist, das in dem Gasvolumen (7) vorhanden ist und länger (41) ist als die zweiten Enden der anderen Leitungen (40).

6. System zur Speicherung einer wässrigen Lösung für Kraftfahrzeug (1) nach einem der vorhergehenden Ansprüche, wobei wenigstens eine Leitung (40) ein erstes Ende aufweist, das in der wässrigen Lösung (6) vorhanden ist und länger ist als die ersten Enden der anderen Leitungen (40).

7. System zur Speicherung einer wässrigen Lösung für Kraftfahrzeug (1) nach einem der vorhergehenden Ansprüche, wobei die wenigstens zwei Leitungen (40) wenigstens durch ein Verbindungsmittel (42) miteinander verbunden sind.

8. System zur Speicherung einer wässrigen Lösung für Kraftfahrzeug (1) nach dem vorhergehenden Anspruch, wobei das wenigstens eine Verbindungsmittel wenigstens eine Öffnung oder ein Durchgangsloch (43) umfasst.

9. System zur Speicherung einer wässrigen Lösung für Kraftfahrzeug (1) nach einem der vorhergehenden Ansprüche, wobei das Mittel (4) zum Freisetzen des Drucks ein einziges einstückiges Teil ist.

10. System zur Speicherung einer wässrigen Lösung für Kraftfahrzeug (1) nach einem der vorhergehenden Ansprüche, wobei das Mittel (4) zum Freisetzen des Drucks aus einem thermoplastischen Material ist, bevorzugt aus Nylon oder aus Polyethylen hoher Dichte, weiter bevorzugt aus Polyethylen hoher Dichte.

11. System zur Speicherung einer wässrigen Lösung für Kraftfahrzeug (1) nach einem der vorhergehenden Ansprüche, wobei der Tank (2) zum Speichern der wässrigen Lösung in einem flüssigen und/oder gefrorenen Zustand wenigstens ein Blockiermittel (20) aufweist, das imstande ist, das Mittel (4) zum Freisetzen des Drucks zu halten.

12. System zum Speichern nach dem vorhergehenden Anspruch, wobei das Blockiermittel (20) eine Rippe (208) ist, die mit einer Nut (204), die von dem Mittel (4) zum Freisetzen des Drucks getragen wird, und einer Klemme (206), die in der Nut (204) angeordnet ist, zusammenwirkt.

13. System zur Speicherung einer wässrigen Lösung für Kraftfahrzeug (1) nach einem der vorhergehenden Ansprüche, wobei das Mittel (4) zum Freisetzen des Drucks sich in der Vertikalen des technischen Moduls (3) befindet, das ein Pumpmittel aufweist.

## Claims

1. Storage system for an aqueous solution for a motor vehicle (1), which system (1) comprises a tank (2) for storing the aqueous solution (6) in a liquid and/or frozen state, wherein a liquid pocket (5) of the aqueous solution (6) can be entirely trapped in a volume of forming ice topped by a gas volume (7), which system (1) comprises a technical module (3) comprising a pumping means and a means for releasing the pressure (4) of the liquid pocket (5) of the aqueous solution (6) into the gas volume (7), such as the pressure release means (4) comprises at least two channels (40) having an increasing cross-section at least along a first length in a direction of propagation of the pressure release and having a first open end and an opposite second open end, such that at least one first end of said channels (40) is present - in use - in the liquid pocket (5) of said aqueous solution (6) and such that at least a second end of said channels (40) is present in said gas volume (7), **characterized in that** the at least two channels (40) of the pressure release means (4) have an increasing cross-section at least along a second length, said second length following the first length in the direction of propagation of the pressure release, the growth of the section being greater along the second length than the growth of the section along the first length.

2. Storage system of an aqueous solution for a motor vehicle according to the preceding claim, wherein the at least two channels (40) of the pressure release means (4) have a conical shape.

3. Storage system of an aqueous solution for a motor vehicle according to the preceding claim, wherein the at least two channels (40) of the pressure release means (4) have a revolution frustoconical shape.

4. Storage system of an aqueous solution for a motor vehicle according to any one of the preceding claims, wherein the at least two channels (40) of the pressure release means (4) have walls of constant thickness along the direction of propagation of the pressure release.

5. Storage system of an aqueous solution for motor vehicle (1) according to any one of the preceding claims, such that at least one channel (40) has a second end present in said volume of gas (7) which is longer (41) than the second ends of the other channels (40).

6. Storage system of an aqueous solution for a motor vehicle (1) according to any one of the preceding claims, such that at least one channel (40) has a first end present in said aqueous solution (6) which is longer than the first ends of the other channels (40).

7. Storage system of an aqueous solution for a motor vehicle (1) according to any one of the preceding claims, such that at least two channels (40) are attached together by at least one solidarization means (42).

8. Storage system of an aqueous solution for motor vehicle (1) according to the preceding claim, such that at least one solidarization means comprises at least one opening or through hole (43).

9. Storage system of an aqueous solution for motor vehicle (1) according to any one of the preceding claims, such that the pressure release means (4) is of a monobloc single piece.

10. Storage system of an aqueous solution for motor vehicle (1) according to any one of the preceding claims, such that the pressure release means (4) is made of thermoplastic material, preferably nylon or high-density polyethylene, more preferably high-density polyethylene.

11. Storage system of an aqueous solution for a motor vehicle (1) according to any one of the preceding claims, such that the tank (2) for storing the aqueous solution in a liquid and/or frozen state comprises at least one blocking means (20) capable of maintaining the pressure release means (4).

12. Storage system according to the preceding claim, wherein the blocking means (20) is a rib (208), which cooperates with a groove (204) carried by the pressure release means (4) and a staple (206) arranged in the groove (204).

13. Storage system of an aqueous solution for motor vehicle (1) according to any one of the preceding claims, such that the pressure release means (4) is located vertically from the technical module (3) comprising a pumping means.
